# EUROPÄISCHE PATENTANMELDUNG

(11) **EP 1 510 327 A2**
(43) Veröffentlichungstag der Anmeldung: **02.03.2005**
(21) Anmeldenummer: 04013327.4
(22) Anmeldetag: 12.01.2001
(51) Int. Cl.: B29C 70/08, B29C 70/88, B32B 15/08

(54) **Metall- und Kunststoffverbund aus langfaserverstärkten Thermoplasten**

(30) Priorität: 21.01.2000 DE 10002642
(62) Teilanmeldung aus: 01100725.9
(71) Anmelder: Ticona GmbH, 65451 Kelsterbach (DE)
(72) Erfinder: Haack, Ulrich, 64665 Alsbach (DE); Pfeiffer, Bernhard, Dr., 65510 Wallbach (DE)

(57) **Zusammenfassung**

Die Erfindung betrifft Metall-Kunststoffverbunde, in denen die verwendeten Kunststoffstrukturen ähnliche thermische Ausdehnungskoeffizienten wie die verwendeten Metalle besitzen und deren Festigkeiten und Steifigkeiten über denjenigen reiner Metallstrukturen liegt.

## Beschreibung

Die vorliegende Erfindung betrifft ein Bauteil aus langglasfaserverstärkten Thermoplasten, welches durch einen Verbund von Metall- und Kunststoffstrukturen gekennzeichnet ist.

Die fortschreitende Automatisierung bei der Montage von Kraftfahrzeugen macht es notwendig oder mindestens hochgradig wünschenswert, daß zusammengehörende Montageeinheiten aus starren und beweglichen Teilen möglichst schon vor ihrem endgültigen Einbau in das entstehende Kraftfahrzeug für sich zusammengefügt und auf ihre bestimmungsgemäße Funktionsfähigkeit geprüft werden können.

Üblicherweise bestehen tragende Strukturen im Fahrzeugbau und bei Industrieanwendungen aus Metallen. Dabei hat sich gezeigt, daß z. B. eine Kreuzverrippung erhebliche Steifigkeits- und Festigkeitssteigerungen hervorruft. Ein ähnlicher Metall-Kunststoffverbund wird in EP 0 370 342 B1 beschrieben. Hierdurch ist es möglich, die Wandstärke bei vorgegebener Last zu reduzieren und dadurch erheblich an Gewicht einzusparen.

Tragende Strukturen können hierbei als Montageträger dienen (Frontend, Türmodul, Armaturtafelträger). Hierzu werden sehr hohe mechanische Eigenschaften gefordert, die durch Metall-Kunststoffverbunde bereitgestellt werden können. Zusätzlich liefert thermoplastisch verarbeiteter Kunststoff den hohen Integrationsgrad, der kostengünstige Konstruktionen möglich macht.

Von Nachteil sind jedoch die Unterschiede der thermischen Ausdehnungskoeffizienten der dort verwendeten Kunststoffe und Metalle. Diese verursachen bei der Verarbeitung und bei Verwendung in Metall-Kunststoffverbunden, die in einem großen Temperaturbereich eingesetzt werden, innere Spannungen und Verzug, die eine niedrigere mechanische Belastbarkeit und raschere Materialermüdung bewirken. Diese Problematik wird in EP 0 370 342 B1, Spalte 2, Zeilen 15-18 angedeutet. Durch die Erwähnung der Tatsache, daß bei einem Metall-Kunststoffverbund der Wärmeausdehnungskoeffizient im Wesentlichen durch das Metall bestimmt wird, wurde auf die oben beschriebenen Nachteile geschlossen.

DE 38 18 478 A1 beschreibt einen Verbundwerkstoff enthaltend eine Metallschicht und eine mit einer Glasfasermatte faserverstärkte, vernetzte Polypropylenschicht mit einem ähnlichen thermischen Ausdehnungskoeffizienten wie das verwendete Metall. Nachteilig hierbei ist, daß durch die Verwendung eine Glasfasermatte und der Vernetzung die Verarbeitung im Spritzguß erschwert oder nicht möglich ist. Ein Recycling des Kunststoffes ist durch die Vernetzung ebenfalls nicht möglich.

Aufgabe der Erfindung war die Herstellung von Metall-Kunststoffverbunden, in denen die verwendeten unvernetzten Kunststoffstrukturen ähnliche thermische Ausdehnungskoeffizienten wie die verwendeten Metalle besitzen und deren Festigkeiten und Steifigkeiten bei höchstens gleichem Gewicht über denjenigen reiner Metallstrukturen liegt.

Überraschenderweise wurde nun gefunden, daß langglasfaserverstärktes Polypropylen einen ähnlichen thermischen Ausdehnungskoeffizienten wie Stahl, Aluminium und Magnesium und eine geringere Kriechneigung als kurzfaserverstärktes Polypropylen besitzt. Somit können Metall-Kunststoffverbunde mit Festigkeiten und Steifigkeiten hergestellt werden, die über denjenigen liegen, die eine reine Metallstruktur liefert, und deren Gewichte unter denen der reinen Metallstruktur liegen.
Gegenstand der Erfindung ist daher ein Metall-Polypropylen-Verbund enthaltend mindestens ein Metall und langglasfaserverstärktes Polypropylen mit einem ähnlichen thermischen Ausdehnungskoeffizienten wie das verwendete Metall. Als langfaserverstärktes Polypropylen bezeichnet man im Allgemeinen Polypropylen, das mit Fasern von mindestens 0,5 mm Länge und maximal 50 mm Länge verstärkt ist. Bevorzugt liegt die Länge der Fasern zwischen 1 mm und 25 mm, insbesondere 1 mm bis 12 mm. Die Länge des zur Herstellung des Verbundes eingesetzten Granulates und der Fasern sind bei diesen Materialien meist identisch. Hierbei können die Fasern im Granulatkorn vollständig mit dem Thermoplasten imprägniert sein oder als kunststoffummanteltes Glasfaserbündel vorliegen.

Es werden Rippen aus Polypropylen in Metallstrukturen eingespritzt. Mit Polypropylen wurde der Thermoplast mit der geringsten Dichte ausgewählt. Durch Verwendung langer Fasern als Verstärkungsstoff können die metallähnlichen Ausdehnungskoeffizienten und eine geringe Kriechneigung erzielt werden, ohne daß der verwendete Thermoplast vernetzt werden musste.

Das langglasfaserverstärkte Polypropylen besitzt mechanische Eigenschaften, die deutlich über denen kurzglasfaserverstärkten Polypropylens liegen.

Durch Verwendung langfaserverstärkten Polypropylens lassen sich extreme Festigkeits- und Steifigkeitssteigerungen, geringe Kriechneigung und ein metallähnlicher thermischer Ausdehnungskoeffizient erreichen.

Die Verbindungsstellen Metall-Kunststoff waren bei den beschriebenen Metall-Polypropylen-Verbunden so hoch belastet, daß auch hierbei die Festigkeits- und Steifigkeitsvorteile im Vergleich zu kurzglasfaserverstärktem Polypropylen erforderlich waren, um ein hochbelastbares Bauteil herzustellen.

Das erfindungsgemäße Verbund-Bauteil kann im allgemeinen aus Metallstrukturen beliebiger Metalle, vorteilhaft aus Eisen und Stahl (auch hochlegiert oder korrosionsgeschützt), Aluminium, Magnesium oder Titan bestehen.
Zur besseren Haftung kann die Oberfläche vorteilhaft mit Haftvermittlern, Primern oder Oberflächenbeschichtungen versehen sein.

Als Kunststoffmaterial können neben neu produziertem Material auch Recyclate der ersten, zweiten oder höheren Generation oder Gemische aus neu produziertem Material mit Recyclaten verwendet werden. Solche Gemische können gegebenenfalls auch Zuschlagstoffe und Zusätze enthalten oder sie können durch Beimischung anderer kompatibler Polymere modifiziert sein.
Der Zusatz von Vernetzern ist nicht notwendig um die erfindungsgemäßen Vorteile zu erreichen.

Das Polypropylen kann neben den langen Verstärkungsfasern noch weitere übliche Zusatz- und Verstärkungsstoffe enthalten, wie zum Beispiel weitere Fasern, insbesondere Metallfasern oder Mineralfasern, Verarbeitungshilfen, polymere Gleitstoffe, ultrahochmolekulares Polyethylen (PE-UHMW), Polytetrafluorethylen (PTFE) und Pfropf-Copolymer, welches ein Produkt einer Pfropfreaktion aus einem Olefin-Polymer und einem Acrylnitril/Styrol-Copolymer ist, Antioxidantien, Haftvermittler, Nukleierungsmittel, Entformungshilfen, Glaskugeln, mineralische Füllstoffe wie Kreide, Calciumcarbonat, Wollastonit, Siliciumdioxid, Talk, Glimmer, Montmorillonit, organisch modifiziert oder unmodifiziert, organisch modifizierte oder unmodifizierte Schichtsilikate, mit dem Kunststoffmaterial Nanokomposite bildende Materialien, Nylon-Nanokomposite oder Mischungen der vorgenannten Stoffe.

Der thermische Ausdehnungskoeffizient ist metallähnlich, wenn er um nicht mehr als 20 x 10⁻⁶ K⁻¹ von dem thermischen Ausdehnungskoeffizienten des verwendeten Metalles abweicht.

Die Polypropylenstrukturen können durch thermoplastische Verarbeitungsverfahren, vorzugsweise durch herkömmliche Techniken wie Spritzguß, Thermoformen, Heißpressen, Spritzprägen, Niederdruckspritzgießen oder Blasformen hergestellt werden.

Die Metallstrukturen besitzen vorzugsweise einen Querschnitt in Form eines U, V oder W. Innerhalb dieser Metallstrukturen kann das Polypropylen beliebige Formen bis hin zu flächigen Schichten ausbilden und mit Funktionsteilen wie Gehäusen oder Gehäuseteilen, Schnappverbindungen und Filmscharnieren versehen sein. Die Funktionsteile können wegen des guten Abriebverhaltens gegenüber Kunststoff und Metall vorteilhaft als Gleitflächen ausgebildet sein. Bevorzugt haben die Kunststoffstrukturen die Form von Rippen.

Die Metall-Kunststoff-Verbindung wird erfindungsgemäß auf zwei verschiedene Arten hergestellt. Bei der erste Methode wird bei einem der thermoplastischen Verarbeitungsverfahren innerhalb der Metallstruktur eine Verbindung hervorgerufen.
Bevorzugt wird die Verbindung durch Formschluß, Hinterschnitt (z. B. in Form eines Schwalbenschwanzes) oder Durchdringen eines Loches oder Schlitzes hergestellt, wobei auf der Rückseite des Loches ein Pfropf entsteht, der ohne Zerstörung nicht mehr durch das Loch gezogen werden kann.
Bei der zweiten Möglichkeit wird die Metall-Kunststoff Verbindung durch Einbringen von zapfenförmigen oder anderweitig ausgebildeten Erhebungen auf dem Kunststoffteil in Aussparungen der Metallstruktur wie zum Beispiel Löchern oder Schlitzen bewirkt. Vorteilhaft wird durch anschließendes Thermoschweißen, Umbugen oder thermisches Verformen eine unlösbare Verbindung hergestellt.
Langglasfaserverstärkte Thermoplaste besitzen ähnliche thermische Ausdehnungskoeffizienten wie Stahl, Aluminium und Magnesium (Tabelle 1).

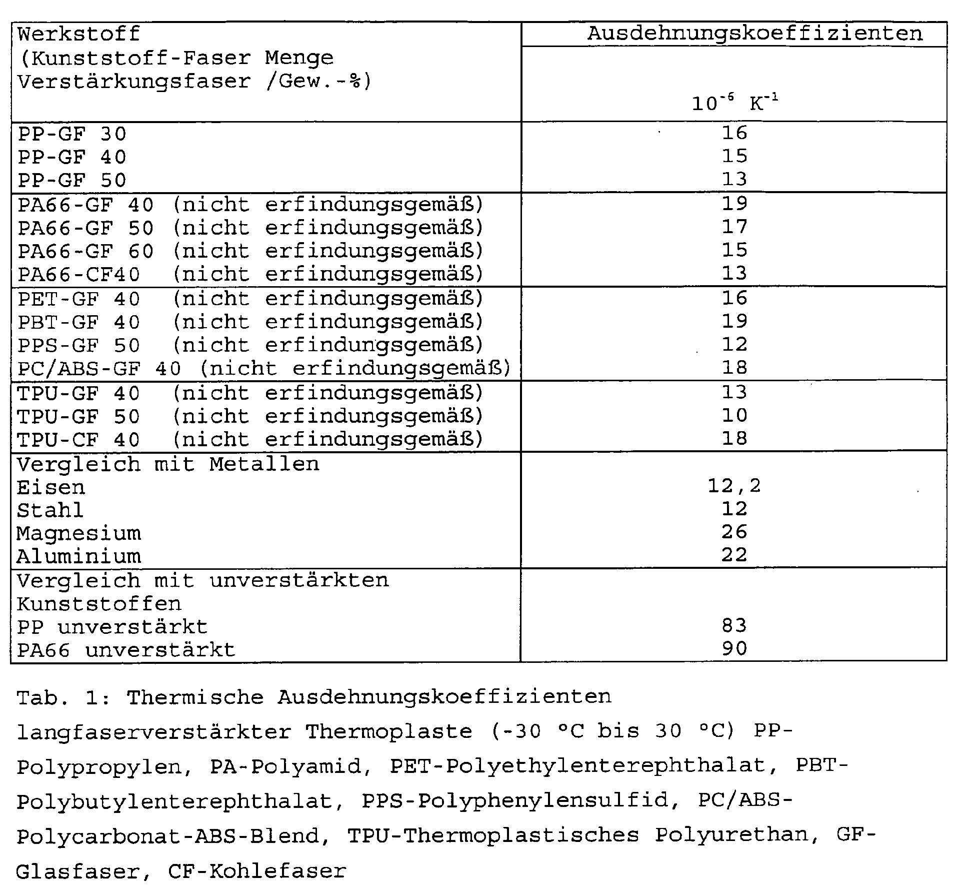

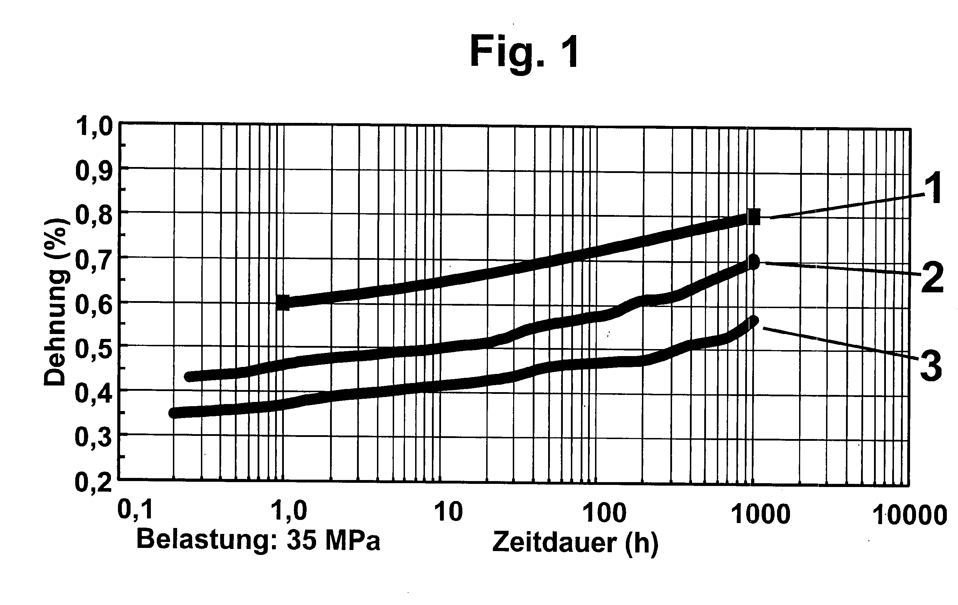

Langglasfaserverstärktes Polypropylen besitzt außerdem eine geringere Kriechneigung als kurzfaserverstärktes Polypropylen. Die Erfindung wird anhand der Figur 1 näher erläutert. In Figur 1 ist die prozentuale Dehnung gegen die Zeitdauer der Belastung aufgetragen. Kurve 1 stellt zum Vergleich das Kriechverhalten eines kurzglasfaserverstärkten Polyamids 6,6 mit einem Glasfaseranteil von 30% dar, Kurven 2 und 3 das Kriechverhalten von langglasfaserverstärktem Polypropylen mit einem Glasfaseranteil von 40% und 50%.
Aufgrund des Kriechverhaltens und des thermischen Ausdehnungskoeffizienten ist langglasfaserverstärktes Polypropylen insbesondere geeignet zur Verwendung in Metall-Kunststoffverbunden, die in einem großen Temperaturbereich eingesetzt werden, wie es z. B. in der Fahrzeugindustrie der Fall ist (-40 bis + 120 °C).

## Patentansprüche

1. Metall-Kunststoffverbund enthaltend mindestens ein Metall sowie Polypropylen, das 30 - 50 Gew.-% Glasfasern einer Länge von 0,5 mm bis 50 mm enthält und das einen thermischen Ausdehnungskoeffizienten besitzt, der um nicht mehr als 20 x 10⁻⁶ K⁻¹ von dem des verwendeten Metalls abweicht.

2. Metall-Kunststoffverbund gemäß Anspruch 1, erhältlich durch herkömmliche thermoplastische Verarbeitungsverfahren wie Spritzguß, Thermoformen, Heißpressen, Spritzprägen, Niederdruckspritzguß oder Blasformen.

3. Metall-Kunststoffverbund gemäß Anspruch 1 oder 2, wobei als Metall Eisen, Stahl, Aluminium, Magnesium oder Titan verwendet wird.

4. Verwendung eines Metall-Kunststoffverbundes nach einem oder mehreren der Ansprüche 1 bis 3 zur Herstellung von tragenden Strukturen in Frontends, Türmodulen, Armaturtafelträgern und sonstigen Montageträgern.
